# EUROPEAN PATENT SPECIFICATION

(11) **EP 4 212 397 B1**
(45) Date of publication and mention of the grant of the patent: **12.02.2025**
(21) Application number: 22151951.5
(22) Date of filing: 18.01.2022
(51) Int. Cl.: B60S 1/34, B60S 1/40

(54) **SYMMETRICAL CONNECTING MEMBER OF A WIPER SYSTEM OF A PANTOGRAPHIC TYPE FOR CLEANING A VEHICLE**
SYMMETRISCHES VERBINDUNGSELEMENT EINES PANTOGRAPHEN-WISCHERSYSTEMS ZUR REINIGUNG EINES FAHRZEUGS
ÉLÉMENT DE CONNEXION SYMÉTRIQUE D'UN SYSTÈME D'ESSUIE-GLACE DE TYPE PANTOGRAPHIQUE POUR NETTOYER UN VÉHICULE

(43) Date of publication of application: 19.07.2023
(73) Proprietor: Valeo Systèmes d'Essuyage, 78322 Le Mesnil Saint Denis (FR)
(72) Inventor: GAWRON, Wojciech, 78321 LE MESNIL SAINT DENIS (FR); ROBLESKI, Jakub, 78321 LE MESNIL SAINT DENIS (FR); CEBULA, Piotr, 78321 LE MESNIL SAINT DENIS (FR)
(74) Representative: Valeo Visibility

(56) References cited:
- EP-A1- 2 712 773
- EP-A2- 0 181 629
- EP-A2- 1 176 069
- EP-A2- 2 821 297
- FR-A1- 2 913 652

## Description

The invention relates to a wiper system for cleaning a vehicle window, and more particularly to an adaptor to link an arm to a wiper blade.

Generally, a vehicle comprises a windshield in front of a driver, who can see, through the windshield, the road. The windshield must be transparent and clean to allow the driver to observe the front of the vehicle. Because of its position, the windshield is subject to weather conditions, cater and dirt cart come onto the window and obstruct the driver's vision. For that, the vehicle comprises a wiper system to wipe out of the window this water and dirt.

The wiper system traditionally consists of an arm extending between a first end attached to the vehicle and a second end to which a wiper blade is attached. The arm is connected to a shaft of a motor of the vehicle via its first end, or sometimes to an output shaft of a linkage, the arm moving back and forth around an axis of the motor or of the output shaft of the linkage to wipe the windshield.

The wiper system of known solution can be of the pantographic type, having two arms that are moving in a coordinated manner. The pantographic wiper system is adapted to hold long and/or heavy wiper blade, especially for heavy truck or bus. The pantographic wiper system generally comprises an adaptor which is the linking part between the two arms and the wiper blade. However, the known adapter of pantographic wiper system do not allow a translational assembly and/or disassembly, along a main direction of one of the arms, which is a drawback for some connections between the adapter and the wiper blade. EP-A-0181629 shows a similar connecting member. The invention is defined by claim 1.

In this context, the present invention is directed towards a connecting member of a wiper system of a pantographic type for cleaning a vehicle window, the connecting member is configured to receive an adaptor of the wiper system, the connecting member comprising at least a first connection body and a second connection body, the first connection body comprising a first pivot link configured to be attached to a first arm of the wiper system and the second connection body comprising a second pivot link configured to be attached to a second arm of the wiper system, the connecting member comprising a connecting device configured to allow a translational assembly of the adaptor, characterized in that the connecting device is located between the first pivot link of the first connection body and the second pivot link of the second connection body.

The connecting member is attached on the one hand to both arms and on the other hand to the adaptor of the wiper blade. In other words, the connecting member is a linking element between the wiper blade and the arms.

It is understood that the connecting device is flanked on both sides by the first connection body and the second connection body. In this configuration, the wiper blade is located between the arms of the wiper system. The location of the connecting device in relation to the connection bodies promotes the aerodynamism of the wiper system when the wiper blade is driven in motion by the arms to wipe a vehicle surface. Moreover, the shape taken by the connecting member is configured to allow a liquid connection between the wiper blade and the arms to supply cleaning liquid to a projection system installed on the wiper blade, for instance.

According to the invention, the connecting device presents a "U-shape" section with two lateral walls and an upper wall linked to the two lateral walls, the lateral walls and the upper wall defining at least in part a housing configured to house the adaptor. The "U-shape" section of the connecting device participates to guide the assembly of the adaptor inside the connecting member, and lock a motion of the adaptor at least along a direction substantially perpendicular to the lateral walls.

According to the invention, at least one of the two lateral walls comprises at least a bended claw located at its free end, the claw being bended towards the other lateral wall. It is understood by "claw" an extension of the lateral wall presenting a curvature towards the other lateral wall. The claw participates to guide the assembly of the adaptor inside the connecting member, and lock a motion of the adaptor at least along a direction substantially perpendicular to the upper wall.

According to another optional characteristic of the invention, both lateral walls comprise at least two bended claws located at their free ends, the claw being bended towards the other lateral wall.

According to another optional characteristic of the invention, the connecting member comprises a lock device configured to cooperate with the adaptor to lock the adaptor with the connecting member. The adaptor comprises a lock body cooperating with the lock device to lock the motion of the adaptor along a main extending direction of the connecting device.

According to another optional characteristic of the invention, the lock device comprises an opening located inside or through the upper wall of the connecting device. The lock body of the adaptor can be a clipping element configured to lock the motion of the adaptor along the main extending direction of the connecting device when the clipping element cooperates with the opening of the lock device.

According to another optional characteristic of the invention, the connecting member is symmetrical with respect to a symmetrical plan that extends in between a first rotational axis of the first pivot link and a second rotational axis of the second pivot link, the connecting device extending along a direction extending in the symmetrical plan and perpendicular to the rotational axis.

According to another optional characteristic of the invention, the first connection body and the second connection body are symmetrical to each other in relation of the symmetrical plan.

According to another optional characteristic of the invention, the first connection body comprises a first flat surface and the second connection body comprises a second flat surface, the first flat surface and the second flat surface extending in a common plan.

According to another optional characteristic of the invention, at least one of the pivot links comprises a shaft hole through at least one of the flat surfaces.

According to another optional characteristic of the invention, at least one of the pivot links comprises a circular hole through at least one of the flat surfaces.

According to another optional characteristic of the invention, at least one of the flat surfaces extends from a first longitudinal extremity of the upper wall to a second longitudinal extremity of the upper wall, a main extension plan of the flat surface being parallel to a main extension plan of the upper wall.

According to another optional characteristic of the invention, at least one of the flat surfaces is a bended portion of the corresponding lateral wall, this bended portion extending in plan parallel, or substantially parallel, to a main extension plan of the upper wall.

According to another optional characteristic of the invention, one of the connecting bodies comprises a flat surface extending from a first longitudinal end of the upper wall to a second longitudinal end of the upper wall, a main extension plan of the flat surface is parallel, or substantially parallel, to a main extension plan of the upper wall, the other connection body comprising a flat surface which is a bended portion of the corresponding lateral wall, this bended portion extending in plan parallel, or substantially parallel, to the main extension plan of the upper wall.

The invention relates to a wiper system of a pantographic type for cleaning a vehicle window, the wiper system comprising a first arm, a second arm and a wiper blade which comprises an adaptor, the wiper system comprising a connecting member as previously described, the first connection body being linked to the first arm via the first pivot link, the second connection body being linked to the second arm via the second pivot link, the adaptor being attached to the connecting device.

Other characteristics, details and advantages of the invention will become apparent on reading the following description, on the one hand, and several examples of realisation given as an indication and without limitation with reference to the schematic drawings annexed, on the other hand, on which:
Fig. 1 is a perspective representation of a vehicle fitted with a wiper system according to the invention;
Fig. 2 is a perspective representation of the wiper system according to the invention;
Fig. 3 is a perspective representation of arms, a wiper blade and a connection member illustrated in figure 2;
Fig. 4 is a perspective representation of a first embodiment of the connection member illustrated in figure 2;
Fig. 5 is a front view of the connection member illustrated in figure 4;
Fig. 6 is a perspective representation of a second embodiment of the connection member illustrated in figure 2.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

In the following description, the designations "longitudinal", "traversal" and "vertical" refer to the orientation of a wiper system according to the invention. A longitudinal direction corresponds to a main direction of extension of a connecting device of a connection member of the wiper system, this longitudinal direction being parallel to a longitudinal axis L of a marker L, V, T shown in the figures. A transversal direction corresponds to a direction of main extension of an extension of a connection body of the connecting member of the wiper system, for example, this transversal direction being parallel to a transverse axis T of a marker L, V, T, and perpendicular to the longitudinal axis L. Finally, a vertical direction corresponds to a vertical axis V of a marker L, V, T, the vertical axis V being perpendicular to the longitudinal axis L and the transversal axis T.

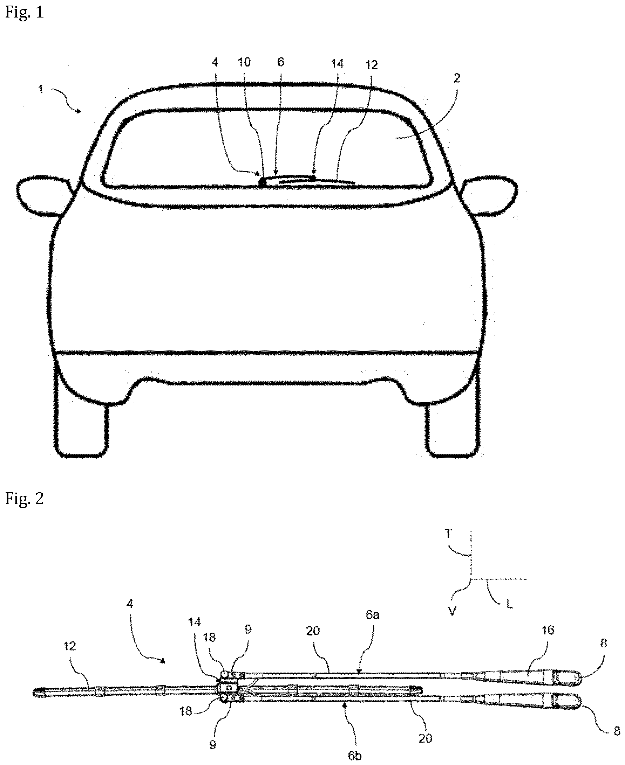

Figure 1 shows a vehicle 1 comprising at least a windshield 2 and a wiper system 4 configured to clean the windshield 2. The wiper system 4 comprises at least an arm 6 and a wiper blade 12, the arm 6 being linked at one of its ends to a shaft of a motor 10, and at its other longitudinal end to the wiper blade 12 by a connecting member 14 which links the wiper blade 12 and the arm 6. For instance, the motor 10 is configured to drive in motion the wiper system 4 around a rotational direction substantially parallel to a motor shaft, the arm 6 moving back and forth around this rotational direction to wipe the windshield 2.

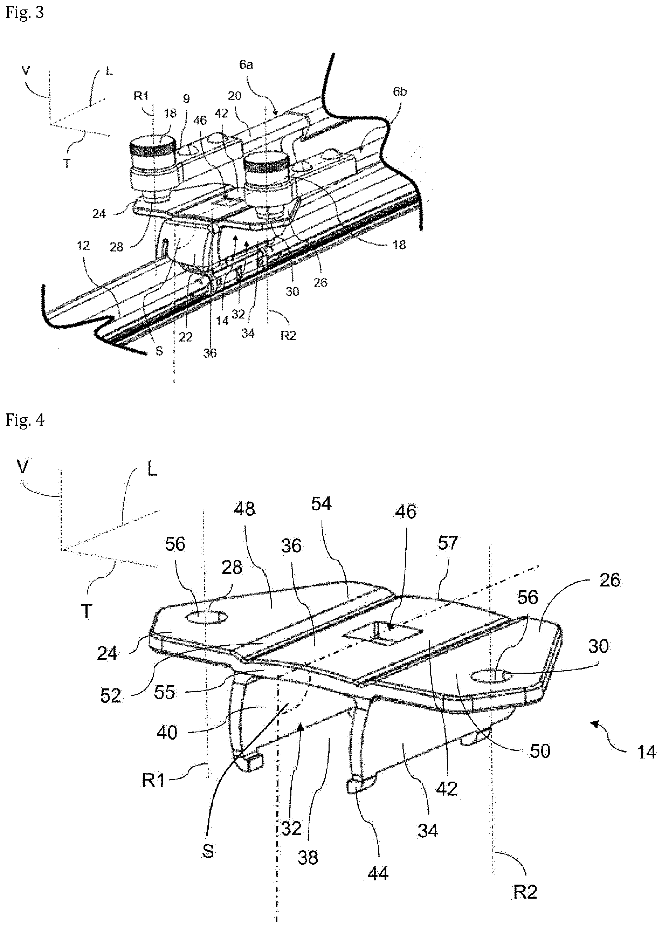

As illustrated on figures 2 or 3, the wiper system 4 comprises a first arm 6a and a second arm 6b, both extend along a direction substantially parallel to the longitudinal axis L. According to this embodiment of the invention, the first arm 6a and the second arm 6b are similar, a description of a characteristic of one arm also applies to the other, the term "arm 6" referring indifferently to the first arm 6a or the second arm 6b. However, the wiper system 4 can comprise two different arms 6a, 6b without going beyond the scope of the invention.

As shown in figure 2, the wiper blade 12 is linked to the arm 6 by a connecting member 14 according to the invention. The arm 6 comprises a first longitudinal end 8 and a second longitudinal end 9, the first longitudinal end 8 being configured to attach the arm 6 to the motor installed on the vehicle, or to an output shaft of a linkage, and the second longitudinal end 9 being configured to link the arm 6 to the connecting member 14.

The arm 6 comprises a retainer device 16 at its first longitudinal end 8, the retainer device 16 comprising, for instance, a cavity cooperating with the shaft of the motor or the output shaft of a linkage. At its second longitudinal end 9, the arm 6 comprises a pivot body 18 which is linked to the connecting member 14 to allow a motion of the arm 6 around a rotational axis R1, R2 passing through its second longitudinal end 9. Moreover, the arm 6 comprises a rod 20 extending along the longitudinal axis L between the retainer device 16 and the pivot body 18.

It is understood that the arm 6 can rotate on the one hand around the rotational direction passing through the first longitudinal end 8, and on the other hand around a rotational axis R1, R2 passing through the second longitudinal end 9. Advantageously, this is the connecting member 14 which is driven around the rotational axes R1, R2 in relation to the arm 6, the arm 6 being driven around the rotational direction passing through the first longitudinal end 8 in relation to the vehicle 1.

The pivot body 18 of the arm 6 takes the shape of a shaft extending along the vertical axis V and passing through the second longitudinal end 9 of the arm 6. To allow the motion of the pivot body 18 as well as the connection member 14, the arm 6 comprises a shaft hole extending through the arm 6 along the vertical axis V, the pivot body 18 being installed at least in part in the shaft hole for instance. Advantageously, the shaft hole is a circular hole.

Description above in relation to the first arm 6a applies to the second arm 6b, in order to form a wiper system 4 of a pantographic type.

As shown on figures 2 or 3, the connecting member 14 is configured to receive an adaptor 22 of the wiper system 4. The adaptor 22 is attached to the wiper blade 12 and, once the adaptor 22 is assembled to the connecting member 14, the wiper blade 12 is attached to the first and the second arms 6a, 6b. Indeed, the connecting member 14 is linked on the one hand to the adaptor 22 and to the other hand to both arms 6a, 6b with their respective pivot 18. With the cooperation between the adaptor 22 and the connecting member 14, the wiper blade 12 is attached to the arms 6a, 6b, and can be driven in motion by the arms 6a, 6b.

It is understood by "adaptor 22" a set comprises at least an adaptor device and a connector cooperating with each other, the connector cooperating also with a support of the wiper blade 12. Advantageously, the connecting member 14 cooperates with the adaptor device of the adaptor 22.

According to the invention, the connecting member 14 comprises a first connection body 24 linked to the first arm 6a via a first pivot link 28, and a second connection body 26 linked to the second arm 6b via a second pivot link 30.

According to the invention, and as shown on the figures 3 or 4, the connecting member 14 comprising at least the first connection body 24 and the second connection body 26, the first connection body 24 comprising the first pivot link 28 attached to the first arm 6a of the wiper system 4, the second connection body 26 comprising the second pivot link 30 attached to a second arm 6b of the wiper system 4.

The connecting member 14 comprises a connecting device 32 configured to allow a translational assembly of the adaptor 22, the connecting device 32 being located between the first pivot link 28 of the first connection body 24 and the second pivot link 30 of the second connection body 26, along the transversal axis T. The connecting device 32, according to the invention, is the element of the connecting member 14 that allows the attachment of the adaptor 22 to the connecting member 14. In this configuration, the connecting device 32 is located between the first arm 6a and the second arm 6b, and more particularly, between the pivot body 18 of both arms 6a, 6b.

It is understood that each connection body 24, 26 is configured to be attached at one of the first or the second arm 6a, 6b. For instance, and as illustrated on figure 3, the first connection body 24 of the connecting member 14 is linked to the first arm 6a whereas the second connection body 26 of the connecting member 14 is linked to the second arm 6b. More particularly, the first pivot link 28 of the first connection body 24 cooperates with the pivot body 18 of the first arm 6a to link the connecting member 14 at the first arm 6a, the second pivot link 30 of the second connection body 26 cooperating with the pivot body 18 of the second arm 6b to link the connecting member 14 at the second arm 6b.

As illustrated in figure 4, the connecting device 32 presents a "U-shape" section with two lateral walls 34 and an upper wall 36 linked to the two lateral walls 34, the lateral walls 34 and the upper wall 36 defining at least in part a housing 38 configured to house the adaptor 22. Both lateral walls 34 extending in a plan parallel, or substantially parallel, to the plan in which the other lateral wall 34 extends. In other words, both lateral walls 34 extend parallel, in a plan that comprises the longitudinal axis L and the vertical axis V.

The upper wall 36 extends in a plan advantageously perpendicular, or substantially perpendicular, to the plans in which extend both lateral walls 34, the upper wall 36 extending parallel to the longitudinal axis L and to the transversal axis T. It is understood that each lateral wall 34 extends from the upper wall 36 along the vertical axis V in the same sense.

As mentioned above, the lateral walls 34 and the upper wall 36 participate to define the housing 38 of the adaptor 22. The housing 38 is a cavity defined by the lateral walls 34 and upper wall 36 of the connecting device 32, this cavity being adapted to house at least in part the adaptor 22 of the wiper blade 12, as illustrated in figure 3.

In this configuration, the connecting device 32 comprises an internal side 40 and an external side 42, each wall of the connecting device 32 presenting this internal and external side 42. The internal side 40 of one lateral wall 34 is in front of the internal side 40 of the other lateral wall 34. It is in particularly the lateral side 40 of the walls 34, 36 which defines the housing 38 of the adaptor 22.

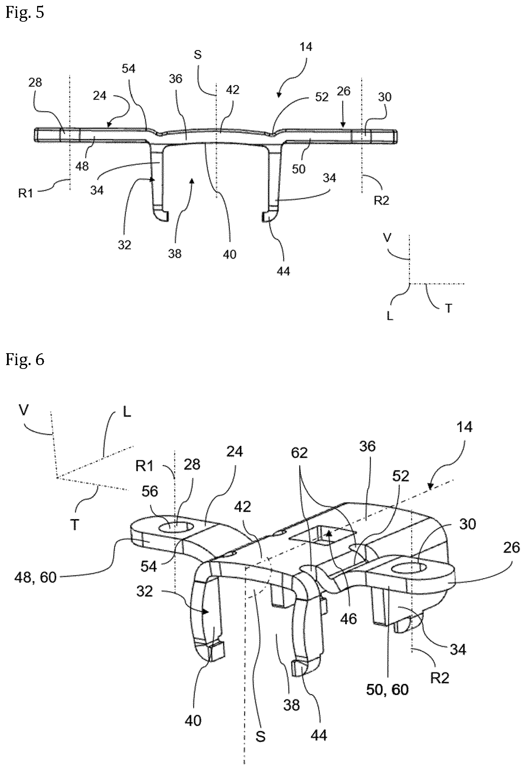

Moreover, and as shown on figure 5, the connecting device 32 takes a "U-shape" section, observed in a cut view made in a plan perpendicular to the longitudinal axis L. Indeed, each lateral wall 34 represents one of the branches of the "U-shape" and the upper wall 36 represents the base of the "U-shape". The shape taken by the connecting device 32 allows a translational assembly of the adaptor 22, the latest being assembled with a motion effected along the longitudinal axis L, this motion pushing the adaptor 22 inside the connecting device 32, and more particularly, in the housing 38.

As shown in figure 3, the connecting member 14 comprises a symmetrical plan S extending between a first rotational axis R1 of the first pivot link 28 and a second rotational axis R2 of the second pivot link 30. The connecting device 32 extends along a direction extending in the symmetrical plan S and perpendicular to the rotational axis R1 or R2. It is understood that the connecting device 32 presents two parts symmetrical to each other, the symmetrical plan S being parallel to the longitudinal axis L. For instance, one symmetrical part of the connecting member 14 comprises the first connection body 24, one of the lateral walls 34 and a part of the upper wall 36, the other symmetrical part comprising the second connection body 26, the other lateral wall 34 and the other part of the upper wall 36.

In this configuration, a characteristic described for one of the symmetrical parts of the connecting member 14 applies to the other part. In other words, a characteristic described in relation to the first connection body 24 can be applied to the second connection body 26.

The pivot links 28, 30 are configured to cooperate with the pivot body 18 of one of the arms 6a, 6b, said pivot body 18 cooperating more particularly with the shaft hole 56. It is understood that the pivot body 18 of one of the arms 6a, 6b can take the shape of a shaft which is located at least in part in the shaft hole 56 of one of the connection bodies 24, 26. The pivot body 18 and the pivot link 28, 30 allow the rotation of the arms 6a, 6b around a rotational axis R, each cooperation between a pivot body 18 and a pivot link 28, 30 forming a rotational axis of an arm 6. In this configuration, the pivot body 18 of the first arm 6a cooperates with the first pivot link 28 of the connecting member 14 to form the rotational axis R1, the first arm 6a being able to rotate around this rotational axis R1. Similarly, the pivot body 18 of the second arm 6b cooperated with the second pivot link 30 of the connecting member 14 to form the rotational axis R2, the second arm 6b being able to rotate around this rotational axis R2.

As illustrated in figure 4, at least one of the two lateral walls 34 comprises at least a bended claw 44 located at its free end, the claw 44 being bended towards the other lateral wall 34. It is understood by "claw" an extension of the lateral wall 34 presenting a curvature towards the other lateral wall 34. The claw 44 participates at least in part to define the housing 38 of the adaptor 22, to guide the motion of the adaptor 22 during the assembly of the adaptor 22, and to lock the position of the adaptor 22 when the latest is inside the housing 38.

Advantageously, the lateral wall 34 comprises two claws 44, each claw 44 being located near a longitudinal end of the lateral wall 34. Both claws 44 participate to define the housing 38 of the adaptor 22 and both claws 44 have the same shape.

In a preferred embodiment, both lateral walls 34 comprise two claws 44, the claws 44 of one of the lateral wall 34 is symmetrical to the claws 44 of the other lateral wall 34, in relation to the symmetrical plan S.

According to the invention, the connecting member 14 comprises a lock device 46 configured to cooperate with the adaptor 22 to lock the adaptor 22 with the connecting member 14. The lock device 46 is configured to cooperate with a lock body located on the adaptor 22. As shown in figure 4, the lock device 46 comprises an opening located inside or through the upper wall 36 of the connecting device 32. The opening takes the shape of a rectangular hole through the upper wall 36, the rectangular hole being located at the same distance of each pivot link 28, 30.

The lock body of the adaptor 22 can comprise a clipping element which is configured to cooperate with the lock device 46 of the connecting member 14.

Once the adaptor 22 is assembled inside the housing 38, the clipping element is located in the opening of the lock device 46, the cooperation between the opening and the clipping element blocking motion of the adaptor 22 along the longitudinal axis L. Moreover, the lateral walls 34 lock the position of the adaptor 22 located inside the housing 38 in relation to the transversal axis T and the upper wall 36 and the claws 44 lock the position of the adaptor 22 inside the housing 38 in relation to the vertical axis V.

As mentioned above, the first connection body 24 and the second connection body 26 are symmetrical to each other in relation of the symmetrical plan S. In this configuration, the first connection body 24 extends from the connecting device 32 as opposed to the second connection body 26.

Moreover, a characteristic described for one of the connection bodies 24, 26 applies for the other connection body 24, 26. In the flowing description, the term "connection body 24, 26" can refer indifferently to the first connection body 24 or to the second connection body 26. However, a connecting member 14 that comprises a first connection body 24 different from a second connection body 26 may enter the scope of the invention.

As shown in figure 4, the first connection body 24 comprises a first flat surface 48 and the second connection body 26 comprises a second flat surface 50, the first flat surface 48 and the second flat surface 50 extending in a common plan. In other words, each connection body 24, 26 is like an extension of the connecting device 32 extending in a main extending plan. More particularly, the connection bodies 24, 26 extend from a linking line between the upper wall 36 and one of the lateral walls 34 of the connecting device 32, in opposition to each other.

Each connection body 24, 26 comprises a demarcation area 52 between its flat surface 48, 50 and the upper wall 36 of the connecting device 32. As illustrated in figures 4 and 5, the demarcation area 52 takes the shape of a groove extending noticeably along the longitudinal axis L.

It is understood that the main extending plan of the first connection body 24 is coplanar with the main extending plan of the second connection body 26. According to the embodiment illustrated on figures 3 to 5, the first connection body 24 and the second connection body 26 extend in a plan that includes the longitudinal axis L and the transversal axis T.

Moreover, the connection bodies 24, 26 extend in a plan noticeably parallel to the main extending plan of the upper wall 36 of the connecting device 32. Advantageously, the plan in which the connection bodies 24, 26 extend and the plan in which the upper wall 36 of the connecting device 32 extends may be coplanar.

Moreover, at least one of the flat surfaces 48, 50 extends from a first longitudinal extremity 55 of the upper wall 36 to a second longitudinal extremity 57 of the upper wall 36, a main extension plan of the flat surface being parallel to a main extension plan of the upper wall 36. In other words, a longitudinal end of one of the connection bodies 24, 26 comes close to the longitudinal end of the upper wall 36, and advantageously, both longitudinal ends of the connection bodies 24, 26 come close to the longitudinal ends of the upper wall 36.

The connection bodies 24, 26 each comprise a contact side 54 with the connecting device 32. The longest dimension of the contact side 54 of each connection body 24, 26 measured along the longitudinal axis L is noticeably similar of a longitudinal dimension of the connecting device 32 measured between the first longitudinal extremity 55 and the second longitudinal extremity 57. In this embodiment, the demarcation areas 52 present the same dimension than the longest dimension of the contact sides 54 of the connection bodies 24, 26 measured along the longitudinal axis L and the longitudinal dimension of the connecting device 32.

At least one of the pivot links 28, 30 comprises a shaft hole 56 made through at least one of the flat surfaces. As shown in figure 4, the flat surface 48, 50 of each connection body 24, 26 comprises the shaft hole 56, the shaft holes 56 of the connection bodies 24, 26 being symmetrical in relation to the symmetrical plan S.

Figure 6 shows a second embodiment of the connection bodies 24, 26, compared to the first embodiment as described on figures 3 to 5. In the description of this second embodiment, references of the first embodiment may be used when they concern same objects.

According to this second embodiment of the invention, at least one of the flat surfaces 48, 50 is a bent portion 60 of the corresponding lateral wall 34. This bent portion 60 extends in plan parallel to a main extension plan of the upper wall 36. It is understood that at least one of the flat surfaces 48, 50 consists of a portion of one of the lateral walls 34, the said portion of the lateral wall 34 being bent or crooked as part of the manufacturing of the connecting member 14.

Advantageously, each flat surface 40, 50 is a bent portion 60 of the corresponding lateral wall 34.

In this second embodiment, the demarcated areas 52 correspond to the area where the bent portion 60 of the lateral wall 34 is realized.

More particularly, the flat surface 48, 50 is delimited longitudinally by two grooves 62 through the lateral wall 34, the two grooves 62 extending from a free end of the lateral wall 34 to the demarcated area 52 along the vertical axis V. In this particular embodiment, each claw 44 is located between one of the grooves 62 and one of the longitudinal ends of the lateral wall 34.

In this second embodiment, at least one of the lateral walls 34, and preferably both lateral walls, comprises two portions that extends in a same plan, a space corresponding to the place where the flat surface was located before bending being placed between those two portions.

## Claims

1. A connecting member (14) of a wiper system (4) of a pantographic type for cleaning a vehicle (1) window, the connecting member (14) is configured to receive an adaptor (22) of the wiper system (4), the adaptor (22) being a set comprising at least an adaptor device and a connector cooperating with each other, the connector cooperating also with a support of a wiper blade (12), the connecting member (14) comprising at least a first connection body (24) and a second connection body (26), the first connection body (24) comprising a first pivot link (28) configured to be attached to a first arm (6a) of the wiper system (4) and the second connection body (26) comprising a second pivot link (30) configured to be attached to a second arm (6b) of the wiper system (4), the connecting member (14) comprising a connecting device (32) configured to allow a translational assembly of the adaptor (22) along a main direction of one of the arms, the connecting device (32) being located between the first pivot link (28) of the first connection body (24) and the second pivot link (30) of the second connection body (26), **characterized in that** the connecting device (32) presents a "U-shape" section with two lateral walls (34) and an upper wall (36) linked to the two lateral walls (34), the lateral walls (34) and the upper wall (36) defining at least in part a housing (38) configured to house the adaptor (22) and **in that** at least one of the two lateral walls (34) comprises at least a bended claw (44) located at its free end, the claw (44) being bended towards the other lateral wall (34).

2. The connecting member (14) according to the preceding claim, comprising a lock device (46) configured to cooperate with the adaptor (22) to lock the adaptor (22) with the connecting member (14).

3. The connecting member (14) according to the preceding claim in combination with the claim 1, **characterized in that** the lock device (46) comprises an opening located inside or through the upper wall (36) of the connecting device (32).

4. The connecting member (14) according to one of the preceding claims, **characterized in that** the connecting member (14) is symmetrical with respect to a symmetrical plan (S) that extends in between a first rotational axis (R1) of the first pivot link (28) and a second rotational axis (R2) of the second pivot link (30), the connecting device (32) extending along a direction extending in the symmetrical plan (S) and perpendicular to the rotational axes (R).

5. The connecting member (14) according to the preceding claim, **characterized in that** the first connection body (24) and the second connection body (26) are symmetrical to each other in relation of the symmetrical plan (S).

6. The connecting member (14) according to one of the preceding claims, **characterized in that** the first connection body (24) comprises a first flat surface (48) and the second connection body (26) comprises a second flat surface (50), the first flat surface (48) and the second flat surface (50) extending in a common plan.

7. The connecting member (14) according to one of the preceding claims, **characterized in that** at least one of the pivot links (28, 30) comprises a shaft hole (56) through at least one of the flat surfaces (48, 50).

8. A wiper system (4) of a pantographic type for cleaning a vehicle (1) window, the wiper system (4) comprising a first arm (6a), a second arm (6b) and a wiper blade (12) which comprises an adaptor (22), the wiper system (4) comprising a connecting member (14) according to one of the preceding claims, the first connection body (24) being linked to the first arm (6a) via the first pivot link (28), the second connection body (26) being linked to the second arm (6b) via the second pivot link (30), the adaptor (22) being attached to the connecting device (32).

## Patentansprüche

1. Verbindungselement (14) eines Pantographen-Wischersystems (4) zum Reinigen einer Fahrzeugfensterscheibe (1), wobei das Verbindungselement (14) dazu ausgelegt ist, einen Adapter (22) des Wischersystems (4) aufzunehmen, wobei der Adapter (22) ein Satz ist, der mindestens eine Adaptervorrichtung und einen Verbinder umfasst, die miteinander zusammenwirken, wobei der Verbinder auch mit einem Träger eines Wischerblatts (12) zusammenwirkt, wobei das Verbindungselement (14) mindestens einen ersten Verbindungskörper (24) und einen zweiten Verbindungskörper (26) umfasst, wobei der erste Verbindungskörper (24) eine erste Schwenkverbindung (28) umfasst, die dazu ausgelegt ist, an einem ersten Arm (6a) des Wischersystems (4) befestigt zu werden, und der zweite Verbindungskörper (26) eine zweite Schwenkverbindung (30) umfasst, die dazu ausgelegt ist, an einem zweiten Arm (6b) des Wischersystems (4) befestigt zu werden, wobei das Verbindungselement (14) eine Verbindungsvorrichtung (32) umfasst, die dazu ausgelegt ist, eine translatorische Montage des Adapters (22) entlang einer Hauptrichtung eines der Arme zu ermöglichen, wobei die Verbindungsvorrichtung (32) zwischen der ersten Schwenkverbindung (28) des ersten Verbindungskörpers (24) und der zweiten Schwenkverbindung (30) des zweiten Verbindungskörpers (26) angeordnet ist, **dadurch gekennzeichnet, dass** die Verbindungsvorrichtung (32) einen "U-förmigen" Querschnitt mit zwei Seitenwänden (34) und einer oberen Wand (36) aufweist, die mit den zwei Seitenwänden (34) verbunden ist, wobei die Seitenwände (34) und die obere Wand (36) mindestens teilweise ein Gehäuse (38) definieren, das dazu ausgelegt ist, den Adapter (22) aufzunehmen, und dadurch, dass mindestens eine der zwei Seitenwände (34) mindestens eine gebogene Klaue (44) umfasst, die an ihrem freien Ende angeordnet ist, wobei die Klaue (44) zur anderen Seitenwand (34) hin gebogen ist.

2. Verbindungselement (14) nach dem vorhergehenden Anspruch, umfassend eine Verriegelungsvorrichtung (46), die dazu ausgelegt ist, mit dem Adapter (22) zusammenzuwirken, um den Adapter (22) mit dem Verbindungselement (14) zu verriegeln.

3. Verbindungselement (14) nach dem vorhergehenden Anspruch in Kombination mit Anspruch 1, **dadurch gekennzeichnet, dass** die Verriegelungsvorrichtung (46) eine Öffnung umfasst, die sich innerhalb oder durch die obere Wand (36) der Verbindungsvorrichtung (32) hindurch befindet.

4. Verbindungselement (14) nach einem der vorhergehenden Ansprüche, **dadurch gekennzeichnet, dass** das Verbindungselement (14) symmetrisch in Bezug auf eine Symmetrieebene (S) ist, die sich zwischen einer ersten Rotationsachse (R1) der ersten Schwenkverbindung (28) und einer zweiten Rotationsachse (R2) der zweiten Schwenkverbindung (30) erstreckt, wobei sich die Verbindungsvorrichtung (32) entlang einer Richtung erstreckt, die in der Symmetrieebene (S) und rechtwinklig zu den Rotationsachsen (R) verläuft.

5. Verbindungselement (14) nach dem vorhergehenden Anspruch, **dadurch gekennzeichnet, dass** der erste Verbindungskörper (24) und der zweite Verbindungskörper (26) in Bezug auf die Symmetrieebene (S) zueinander symmetrisch sind.

6. Verbindungselement (14) nach einem der vorhergehenden Ansprüche, **dadurch gekennzeichnet, dass** der erste Verbindungskörper (24) eine erste ebene Fläche (48) und der zweite Verbindungskörper (26) eine zweite ebene Fläche (50) umfasst, wobei sich die erste ebene Fläche (48) und die zweite ebene Fläche (50) in einer gemeinsamen Ebene erstrecken.

7. Verbindungselement (14) nach einem der vorhergehenden Ansprüche, **dadurch gekennzeichnet, dass** mindestens eine der Schwenkverbindungen (28, 30) ein Wellenloch (56) durch mindestens eine der ebenen Flächen (48, 50) umfasst.

8. Pantographen-Wischersystem (4) zum Reinigen einer Fahrzeugfensterscheibe (1), wobei das Wischersystem (4) einen ersten Arm (6a), einen zweiten Arm (6b) und ein Wischerblatt (12) umfasst, das einen Adapter (22) umfasst, wobei das Wischersystem (4) ein Verbindungselement (14) nach einem der vorhergehenden Ansprüche umfasst, wobei der erste Verbindungskörper (24) über die erste Schwenkverbindung (28) mit dem ersten Arm (6a) verbunden ist, der zweite Verbindungskörper (26) über die zweite Schwenkverbindung (30) mit dem zweiten Arm (6b) verbunden ist, wobei der Adapter (22) an der Verbindungsvorrichtung (32) befestigt ist.

## Revendications

1. Élément de connexion(14) d'un système d'essuie-glace (4) de type pantographique pour nettoyer une fenêtre de véhicule(1), l'élément de connexion(14) étant configuré pour recevoir un adaptateur(22) du système d'essuie-glace(4), l'adaptateur(22) étant un ensemble comprenant au moins un dispositif d'adaptateur et un connecteur coopérant l'un avec l'autre, le connecteur coopérant également avec un support d'un balai d'essuie-glace(12), l'élément de connexion(14) comprenant au moins un premier corps de connexion(24) et un second corps de connexion(26), le premier corps de connexion (24) comprenant une première liaison pivot(28) configurée pour être fixée à un premier bras(6a) du système d'essuie-glace(4) et le second corps de connexion(26) comprenant une seconde liaison pivot(30) configurée pour être fixée à un second bras(6b) du système d'essuie-glace(4), l'élément de connexion(14) comprenant un dispositif de connexion(32) configuré pour permettre un assemblage translationnel de l'adaptateur(22) le long d'une direction principale de l'un des bras, le dispositif de connexion(32) étant situé entre la première liaison pivot(28) du premier corps de connexion(24) et la seconde liaison pivot(30) du second corps de connexion(26), **caractérisé en ce que** le dispositif de connexion(32) présente une section en forme de U avec deux parois latérales(34) et une paroi supérieure(36) liée aux deux parois latérales(34), les parois latérales(34) et la paroi supérieure(36) définissant au moins en partie un boîtier(38) configuré pour abriter l'adaptateur(22) et **en ce qu'**au moins l'une des deux parois latérales(34) comprend au moins une griffe pliée(44) située au niveau de son extrémité libre, la griffe(44) étant pliée vers l'autre paroi latérale(34).

2. Élément de connexion (14) selon la revendication précédente, comprenant un dispositif de verrouillage (46) configuré pour coopérer avec l'adaptateur (22) pour verrouiller l'adaptateur (22) avec l'élément de connexion (14).

3. Élément de connexion (14) selon la revendication précédente en combinaison avec la revendication 1, **caractérisé en ce que** le dispositif de verrouillage (46) comprend une ouverture située à l'intérieur de ou à travers la paroi supérieure (36) du dispositif de connexion (32).

4. Élément de connexion (14) selon l'une des revendications précédentes, **caractérisé en ce que** l'élément de connexion (14) est symétrique par rapport à un plan symétrique(S) qui s'étend entre un premier axe de rotation(R1) de la première liaison pivot (28) et un second axe de rotation(R2) de la seconde liaison pivot (30), le dispositif de connexion (32) s'étendant le long d'une direction s'étendant dans le plan symétrique(S) et perpendiculaire aux axes de rotation(R).

5. Élément de connexion (14) selon la revendication précédente, **caractérisé en ce que** le premier corps de connexion (24) et le second corps de connexion (26) sont symétriques l'un à l'autre par rapport au plan symétrique(S).

6. Élément de connexion (14) selon l'une des revendications précédentes, **caractérisé en ce que** le premier corps de connexion (24) comprend une première surface plate (48) et le second corps de connexion (26) comprend une seconde surface plate (50), la première surface plate (48) et la seconde surface plate (50) s'étendant dans un plan commun.

7. Élément de connexion (14) selon l'une des revendications précédentes, **caractérisé en ce qu'**au moins l'une des liaisons pivot (28, 30) comprend un trou d'arbre (56) à travers au moins l'une des surfaces plates (48, 50).

8. Système d'essuie-glace(4) de type pantographique pour nettoyer une fenêtre de véhicule(1), le système d'essuie-glace(4) comprenant un premier bras(6a), un second bras(6b) et un balai d'essuie-glace(12) qui comprend un adaptateur(22), le système d'essuie-glace(4) comprenant un élément de connexion(14) selon l'une des revendications précédentes, le premier corps de connexion(24) étant relié au premier bras(6a) par l'intermédiaire de la première liaison pivot (28), le second corps de connexion(26) étant relié au second bras(6b) par l'intermédiaire de la seconde liaison pivot(30), l'adaptateur(22) étant fixé au dispositif de connexion (32) .
